# EUROPEAN PATENT SPECIFICATION

(11) **EP 2 888 949 B1**
(45) Date of publication and mention of the grant of the patent: **02.01.2019**
(21) Application number: 13833356.2
(22) Date of filing: 11.07.2013
(51) Int. Cl.: A23L 7/183

(54) **METHOD FOR THE TREATMENT OF CORN KERNELS INTENDED FOR THE PRODUCTION OF POPCORN USING MICROWAVE APPLIANCES, AND RESULTING PRODUCT**
VERFAHREN ZUR BEHANDLUNG VON MAISKÖRNERN FÜR DIE HERSTELLUNG VON POPCORN MIT MIKROWELLENVORRICHTUNGEN UND RESULTIERENDES PRODUKT
PROCÉDÉ POUR LE TRAITEMENT DE GRAINS DE MAÏS DESTINÉS À L'OBTENTION DE POP-CORNS DE MAÏS AU MOYEN D'APPAREILS À MICRO-ONDES, ET PRODUIT AINSI OBTENU

(30) Priority: 27.08.2012 ES 201231330
(43) Date of publication of application: 01.07.2015
(73) Proprietor: DODE, S.A., 08197 Sant Cugat Del Valles (Barcelona) (ES)
(72) Inventor: GALCERAN MARTORELL, Carlos, 08242 Manresa (Barcelona) (ES)
(74) Representative: Elzaburu S.L.P.
(86) International application number: PCT/ES2013/070497
(87) International publication number: WO 2014/033338

(56) References cited:
- EP-A2- 0 242 828
- EP-A2- 0 242 828
- EP-A2- 0 262 791
- GB-A- 2 474 937
- US-A1- 2004 161 501
- US-A1- 2004 241 291
- Anonymous: "Sunflower lecithin, the new alternative to soy lecithin | Natural Solutions Radio", , 16 June 2010 (2010-06-16), XP055269918, Retrieved from the Internet: URL:http://naturalsolutionsradio.com/blog/ natural-solutions-radio-administrator/sunf lower-lecithin-new-alternative-soy-lecithi n [retrieved on 2016-05-02]
- "Lecithin (emulsifier)", , 26 December 2010 (2010-12-26), XP055270072, Retrieved from the Internet: URL:https://nouveauraw.com/thickeners-bind ers-emulsifiers/raw-lecithin-thickener/ [retrieved on 2016-05-02]

## Description

### OBJECT OF THE INVENTION

The present invention is related to a method that has been specially designed for the treatment of corn kernels such that these can be cooked in a microwave appliance in order to obtain the classic "popcorn".

The object of the invention is to provide a method whereby a healthy and
crunchy product is obtained wherein the popcorn obtained do not stick together, such that the same have a more even cooking and a tastier texture.

### BACKGROUND OF THE INVENTION

In the field of practical application of the invention, many treatments that
are applied to corn kernels so that they can be transformed into popcorn in a microwave appliance are known.

To do this, corn is not heated directly, but it must be treated with oils, starches or the like in addition to other flavoring products such as salt, sugar, butter, etc.

In the case of the oils used, the most common is palm oil which, it has been found, is not one of the healthiest products because it has a high content of bad fats, to which it must be added the fact that with these oils the product obtained is stuck together, having a heterogeneous texture, wherein certain areas are not crispy but soft, with the consequent negative impact this entails. Trying to obviate this problem, invention patent EP0242828 envisages the use of soy lecithin and oil component to prevent the popcorn from sticking together when they burst open.

The composition includes a glazing blend combined with unpopped popcorn and package for processing in a microwave oven. The glazing blend includes an oil component, a sugar component, a water component and a lecithin component, with the water and lecithin being in amounts effective to form a glaze and to control heating of the blend to permit substantially complete popping of the corn without burning the blend.

However, while it is true that the use of soy lecithin achieves popcorn that are less stuck together, it contains allergens, i.e. protein substances that can cause allergies in susceptible individuals; also the product obtained has a quality that can still be improved, with respect to both the crispness of popcorn, and the degree of disintegration of the product obtained. US2004/0161501A1 describes a method of preliminary preparation of microwave pop-corn having oil such as coconut oil, soy-bean oil, palm oil, canola oil or their mixtures with a melt point between 23° C and 38° C, and homogenization of the products before their packing, different flavouring recipes and additional natural products, the one-layer packs or multiple-layers at least one of which is made of greaseproof paper with a degree of greaseproofness superior to 1800+/1800+, TAPPI T-454-05-96, in which the mixture is divided in equal parts, the pack may be with or without susceptor because of the low melt point, which contributes to obtain a regular liquid form of the oil.

### DESCRIPTION OF THE INVENTION

The method for the treatment of corn kernels proposed entails a further evolution regarding the state of the art that has been described above, since it allows obtaining a healthier, crunchy product, and wherein cornflakes are completely disintegrated once obtained.

To that end and more specifically, the method of the invention as defined in the claims, starts, as is conventional, from the mixing of the dry corn kernels in a flavoring solution, which can include salt, sugar, butter, or any conventional flavoring product, with the particularity that instead of the previously mentioned oils or soy lecithin, sunflower lecithin is used in liquid or solid form.

This component, the use of sunflower lecithin is the essence of the invention, due to its low fat content and the particularity that it does not contain allergens, to which the high degree of dissociation of cornflakes obtained by employing the same, and the extremely crisp texture of the product must be added.

Once the corn kernels have been mixed in the above solution for a preset time, together with the usual flavoring products, they are dried according to the humidity to be subsequently packaged, and the method is terminated.

The invention also concerns the product obtained, as defined in the claims, which consists of a corn kernel which incorporates a coating based on sunflower lecithin and flavoring product, such as salt, sugar, butter or the like.

### PREFERRED EMBODIMENT OF THE INVENTION

An example of practical embodiment of the invention will be described below by way of example, although the amounts of product used shall not to be taken into consideration by way of limitation, but merely by way of illustration, and these may vary within the scope of the claims.

Thus, by way of example, for the treatment of 80 grams of dry, raw corn, for different finishes, the following products are mixed for a time ranging from less than one minute to three minutes:

| | |
|---|---|
| Sunflower lecithin | 2 grams. |
| or | |
| Sunflower lecithin | 2 grams. |
| Salt | 6 grams. |
| or | |
| Sunflower lecithin | 2 grams. |
| Salt | 6 grams. |
| Butter flavoring | 1 gram. |
| or | |
| Sunflower lecithin | 2 grams. |
| Brown sugar | 2 grams. |
| and/or Molasses | 1 gram. |
| and/or Stevia sweetener | 1 gram. |
| and/or Caramel flavoring | 1 gram. |

The corn kernels are mixed with said products for the appropriate time according to the additives added and, where appropriate, allowed to dry, to be subsequently packaged.

In this manner, the obtained product has after the treatment process a coating based on sunflower lecithin and flavoring product, which allow obtaining, after cooking in the microwave appliance, extremely healthy popcorn, with a low fat content, crunchy, with a homogeneous texture, which do not stick together, and with the certainty that they do not contain allergens.

As stated above, the example described above refers only to obtaining a type of popcorn, while the flavoring products may be any other product applicable in such foods, without affecting the essence of the invention.

## Claims

1. Method for the treatment of corn kernels intended for obtaining popcorn by means of microwave appliances, in which method the corn kernels are mixed for a preset time with a glazing solution with subsequent drying and packaging, **characterized in that** the glazing solution consists of sunflower lecithin, alone or in combination with:
i) salt,
ii) sugar and/or molasses and/or stevia sweetener and/or caramel flavoring.

2. Corn kernels intended for obtaining popcorn by means of microwave appliances, **characterized in that** they are coated by a glazed blend, which consists of sunflower lecithin, alone or in combination with:
i) salt,
ii) sugar and/or molasses and/or stevia sweetener and/or caramel flavoring.

## Patentansprüche

1. Verfahren zur Behandlung von Maiskörnern, vorgesehen zur Gewinnung von Popcorn mittels Mikrowellenvorrichtungen, wobei in dem Verfahren die Maiskörner für eine vorgegebene Zeit mit einer Glasurlösung gemischt werden, mit anschließender Trocknung und Verpackung, **dadurch gekennzeichnet, dass** die Glasurlösung aus Sonnenblumenlecithin besteht, allein oder in Kombination mit:
i) Salz,
ii) Zucker und/oder Melasse und/oder Stevia-Süßstoff und/oder Karamellaroma.

2. Maiskörner, vorgesehen zur Gewinnung von Popcorn mittels Mikrowellenvorrichtungen, **dadurch gekennzeichnet, dass** sie mit einem glasierten Gemisch beschichtet sind, das aus Sonnenblumenlecithin besteht, allein oder in Kombination mit:
i) Salz,
ii) Zucker und/oder Melasse und/oder Stevia-Süßstoff und/oder Karamellaroma.

## Revendications

1. Procédé pour le traitement de grains de maïs destinés à l'obtention de maïs soufflé au moyen d'appareils à micro-ondes, procédé dans lequel les grains de maïs sont mélangés pendant un temps prédéfini dans une solution de glaçage, avec un séchage et un emballage subséquents, **caractérisé en ce que** la solution de glaçage consiste en de la lécithine de tournesol, seule ou en combinaison avec:
i) du sel,
ii) du sucre et/ou de la mélasse et/ou de l'édulcorant stévia et/ou de l'arôme de caramel.

2. Grains de maïs destinés à l'obtention de maïs soufflé au moyen d'appareils à micro-ondes, **caractérisés en ce qu'**ils sont enrobés par un mélange glacé, qui consiste en de la lécithine de tournesol, seule ou en combinaison avec:
i) du sel,
ii) du sucre et/ou de la mélasse et/ou de l'édulcorant stévia et/ou de l'arôme de caramel.
